**Europäisches Patentamt**

**European Patent Office**

**Office européen des brevets**

(11) Veröffentlichungsnummer: **0 050 311**
A2

(12) **EUROPÄISCHE PATENTANMELDUNG**

(21) Anmeldenummer: **81108338.5**

(22) Anmeldetag: **15.10.81**

(51) Int. Cl.³: **F 02 G 5/00**

(30) Priorität: **18.10.80 DE 3039392**

(43) Veröffentlichungstag der Anmeldung: **28.04.82**
**Patentblatt 82/17**

(84) Benannte Vertragsstaaten: **FR GB IT**

(71) Anmelder: **Schönnenbeck, Günter, Dipl.-Ing., Am Hahnwald 4, D-6272 Niederhausen (DE)**
Anmelder: **Steinrötter, Heinz; Dipl.-Ing., Burgstrasse 2, D-6239 Eppstein (DE)**
Anmelder: **Veith, John, Ing., Brunhildenstrasse 66, D-6600 Wiesbaden (DE)**
Anmelder: **Osterbrink, Hans, Dipl.-Ing., Johannesallee 24, D-6230 Frankfurt 80 (DE)**

(72) Erfinder: **Schönnenbeck, Günter, Dipl.-Ing., Am Hahnwald 4, D-6272 Niederhausen (DE)**
Erfinder: **Steinrötter, Heinz; Dipl.-Ing., Burgstrasse 2, D-6239 Eppstein (DE)**
Erfinder: **Veith, John, Ing., Brunhildenstrasse 66, D-6600 Wiesbaden (DE)**
Erfinder: **Osterbrink, Hans, Dipl.-Ing., Johannesallee 24, D-6230 Frankfurt 80 (DE)**

(54) Verfahren zur Leistungserhöhung bzw. Verringerung des Energieeinsatzes bei Wärmekraftmaschinen durch Nutzung der Verlustwärmen.

(57) Die bei Wärmekraftmaschinen auftretenden Verlustwärmen (ca. 75%) werden mit Hilfe eines Zwischenmediums (16) einem Umlaufmedium (17) derart zugeführt, daß beim Durchlaufen der Aggregatzustände, z.B. in einer Entspannungsturbine (7) zusätzliche mechanische Energie gewonnen wird, die über ein Getriebe (8) und eine geeignete hydraulische Kupplung (9) auf die Arbeit leistende Maschine oder anderen Aggregate (Generatoren, Verdichter usw.) übertragen werden kann. Die beispielhafte Anordnung gestattet es, entweder die nutzbare mechanische Leistung der Verbrennungskraftmaschine um ca. 40% zu steigern, oder den Kraftstoffverbrauch um ca. 30% zu senken.

- 1 -

Beschreibung

Verfahren zur Leistungserhöhung bzw. Verringerung des
Energieeinsatzes bei Wärmekraftmaschinen durch Nutzung der
Verlustwärmen

Bei herkömmlichen Wärmekraftmaschinen geht der größte Teil der eingesetzten Energie dadurch verloren, daß die Wärmeinhalte der Abgase
und des Kühlwassers ungenutzt bleiben. Ebenso ist der Verlust durch
Strahlung der nicht gekühlten Maschinenteile erheblich.

So steht beispielsweise bei einem wassergekühlten Ottomotor im
Kraftfahrzeug nur ca. 25 % der eingebrachten Kraftstoffenergie als
nutzbare Motorarbeit an der Kurbelwelle zur Verfügung. Ca. 35 %
der eingesetzten Energie gehen mit den Auspuffgasen, ca. 20 % über
das Kühlwasser und ca. 20 % durch Strahlung verloren.

Gegenstand der Erfindung ist eine Wärmekraftmaschine, bei der diese
Gesamtverluste durch den Einsatz von Arbeit leistenden Umlaufmedien
teilweise in zusätzliche mechanische Energie umgewandelt werden.

Erläuterungen am Beispiel eines Kfz.-Verbrennungsmotors
(s. schematische Abbildung)
Kraftstoff (1) und Luft (2) werden nach herkömmlicher Vergasung
bzw. Vorwärmung und Vermischung dem Brennraum des Zylinders (3)
zugeführt. Zur Kühlung des Motorblocks dient ein Mantelraum (4), der
mit dem Zwischenmedium (16) Aethylenglykol gefüllt ist. Mit diesem
Kühlsystem ist ebenfalls ein geeigneter Wärmeaustauscher (5) verbunden, in dem der Wärmeinhalt der Auspuffgase an das Glykol übertragen wird. Durch diese Wärmeaufnahme verdampft das Glykol. In dem
Glykoldampfraum befindet sich ein Wärmeaustauscher (6), in dem die
vom Glykol aufgenommene Wärme an das Umlaufmedium (17)(R) Frigen 11
zur Verdampfung desselben abgegeben wird. Dabei kondensiert das
Glykol. Das thermostabile Zwischenmedium Glykol (16) dient dem Zweck,
das Umlaufmedium (17) vor thermischer Zersetzung zu schützen.

Der unter Druck stehende Frigendampf wird in einer Turbine (7) entspannt. Die dabei gewonnene mechanische Energie wird über ein Getriebe (8) und eine Kupplung (9) an die Kurbelwelle (10) des Motors abgegeben.

Der entspannte Frigendampf wird in einem Luftkühler (11) kondensiert, am Tiefpunkt (12) desselben gesammelt, um von dort mittels einer Pumpe (13) zum Frigenverdampfer (6) mit dem erforderlichen Überdruck zurückgefördert zu werden.

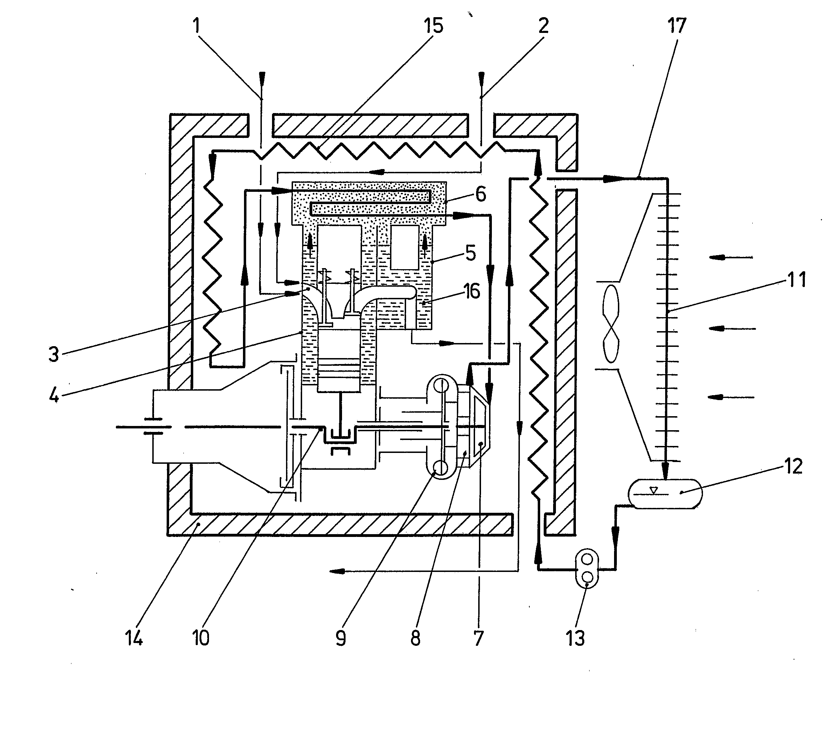

Der gesamte Motorblock ist, wie in der Abbildung schematisch dargestellt, derart isoliert, daß Wärmeverluste durch Strahlung nach außen weitgehendst vermieden werden. Die Strahlungswärme innerhalb der isolierten Kapselung (14) wird teilweise zur Vorwärmung (15) des flüssigen Frigens benutzt, der Restanteil wird über das Zwischenmedium Glykol (Kühlung) abgeführt.

Ferner sind folgende Varianten zu der oben beschriebenen Anordnung bzw. Ausrüstung möglich:

Die zusätzlich durch das Umlaufmedium gewonnene Energie kann außer an die Entspannungsturbine (7) an Verdrängermaschinen, sich auslenkende Membranen oder zusätzliche Zylinder konventioneller Bauart abgegeben und in mechanische Energie umgewandelt werden. Auch kann diese Energie zum Antrieb separater Aggregate genutzt werden, die nicht mit der Wärmekraftmaschine mechanisch oder hydraulisch gekoppelt sind, z.B. Generatoren.

Der für die Übertragung der Auspuffwärme vorgesehene Wärmetauscher (5) kann für die Aufnahme von Abgaskatalysatoren zwecks Reduzierung von Schadstoffemissionen vorgesehen werden.

Beispiel:

Kfz.-Ottomotor

Leistung an der Kurbelwelle bei konventioneller Bauart:
100 PS = 73,5 kW

Zwischenmedium: Aethylenglykol $C_2H_6O_2$

Umlaufmedium: Trichlorfluormethan $C\ Cl_3\ F$ ($^{(R)}$Frigen 11)

Frigen-Eintritt in Turbine:  26 bar, 160° C

Frigen-Austritt aus Turbine:  3,3 bar, 70° C

Dadurch erhöhte Gesamtleistung des Motors

ca. 105 kW

d.h. es ergibt sich gegenüber einem Kfz.-Ottomotor herkömmlicher Bauart eine Leistungserhöhung durch das erfindungsgemäße Verfahren um

ca. 43 %

bzw. bei vorgegebener Gesamtleistung eine Ersparnis an eingesetzter Energie pro kW

um ca. 30 %

Patentansprüche:

1. Verfahren zur Erhöhung der Leistung von Wärmekraftmaschinen durch Nutzung der Verlustwärmen aus Abgas und/oder Kühlung und/oder Strahlung dadurch gekennzeichnet, daß man mit den Verlustwärmen mit Hilfe eines Zwischenmediums (16) ein unter Überdruck stehendes Umlaufmedium (17) verdampft, das Umlaufmedium unter Leistung von Arbeit entspannt, anschließend kondensiert und das Kondensat in die Verdampfung zurückführt.

2. Verfahren nach Anspruch 1 dadurch gekennzeichnet, daß man mit der Verlustwärme mit Hilfe eines Zwischenmediums (16), z.B. Äthylenglykol, ein unter Überdruck stehendes Umlaufmedium (17) verdampft, das bis 200° C thermostabil ist, dessen Dampfdruck bei 200° C 50 bar nicht übersteigt und das bei Umgebungstemperatur kondensierbar ist.

3. Wärmekraftmaschine mit gekammertem Motorblock und mit Einrichtungen zum Erhöhen der Leistung durch Nutzen der Verlustwärme dadurch gekennzeichnet, daß in der Kammerung (14) mindestens ein Wärmetauscher (6) angeordnet ist, der mit einem Kondensator (11) einen Kreislauf bildet, in dem dampfseitig eine mit der Arbeitswelle der Wärmekraftmaschine verbundene Arbeitsmaschine (7) und flüssigkeitsseitig eine Druckpumpe (13) angeordnet ist.

4. Wärmekraftmaschine nach Anspruch 3 dadurch gekennzeichnet, daß die Arbeitsmaschine (7) über eine Kupplung (9) und ein Getriebe (8) mit der Arbeitswelle (10) der Wärmekraftmaschine verbunden ist.

5. Wärmekraftmaschine nach Anspruch 3 oder 4 dadurch gekennzeichnet, daß der Abgaskanal als Wärmetauscher (5) ausgebildet ist.

6. Wärmekraftmaschine nach den Ansprüchen 3 bis 5 dadurch gekennkennzeichnet, daß der Motorblock zwecks Nutzung der Strahlungswärme und Schallisolierung mit der Arbeitsmaschine gekapselt ist.

- 5 -

7. Wärmekraftmaschine nach den Ansprüchen 3 bis 6 dadurch gekennzeichnet, daß zwischen Druckpumpe (13) und Wärmetauscher (6) oder mehrere Wärmetauscher (15) zur Aufnahme der Strahlungswärme im Hohlraum zwischen Motorblock und Kapselung angeordnet ist.